# EUROPÄISCHE PATENTSCHRIFT

(11) **EP 2 000 691 B1**
(45) Veröffentlichungstag und Bekanntmachung des Hinweises auf die Patenterteilung: **09.12.2009**
(21) Anmeldenummer: 08010023.3
(22) Anmeldetag: 02.06.2008
(51) Int. Cl.: F16D 23/12

(54) **Ausrückvorrichtung**
Disengaging device
Dispositif de débrayage

(30) Priorität: 08.06.2007 DE 102007026659
(43) Veröffentlichungstag der Anmeldung: 10.12.2008
(73) Patentinhaber: LuK Lamellen und Kupplungsbau Beteiligungs KG, 77815 Bühl (DE)
(72) Erfinder: Dreher, Alexander, 76547 Sinzheim (DE); Reik, Wolfgang Dr., 77815 Bühl (DE); Friedmann, Oswald, 77839 Lichtenau (DE); Mán, Lászlo Dr., 77833 Ottersweiler-Unzhurst (DE); Burkhart, Dirk, 76889 Klingenmünster (DE)

(56) Entgegenhaltungen:
- EP-A- 1 455 106
- EP-A- 1 775 494
- WO-A-02/25136
- DE-A1-102007 003 715

## Beschreibung

Die vorliegende Erfindung betrifft eine Ausrückvorrichtung zur Betätigung einer Kupplung, insbesondere einer Kupplung im Antriebsstrang eines Kraftfahrzeuges zwischen Antriebsmotor und Schaltgetriebe nach dem Oberbegriff des Anspruchs 1.

Eine derartige Ausrückvorrichtung wird auch als Wipphebelaktor bezeichnet. Ein gattungsbildender Wipphebelaktor ist beispielsweise aus der DE 10 2004 009 832 und aus EP 1 775 494 bekannt.

Des Weiteren sind hubgesteuerte selbstnachstellende Kupplungen bekannt, deren Nachstellung bei Überschreiten eines bestimmten Ausrückweges ausgelöst wird. Die Kennlinien derartiger Kupplungen streuen stark, sodass es hier zu großen Aktorlasten bis zur Auslösung der Selbstnachstellung kommen kann.

Eine Aufgabe der vorliegenden Erfindung ist es daher, die Aktorlasten durch die Kennlinienstreuung der Kupplung aufgrund von Verschleiß und Toleranz zu verringern.

Dieses Problem wird gelöst durch eine Ausrückvorrichtung zur Betätigung einer Kupplung, insbesondere einer Kupplung im Antriebsstrang eines Kraftfahrzeuges zwischen Antriebsmotor und Schaltgetriebe, umfassend einen Ausrückhebel, der sich mit einem Innenlager an einem Ausrücklager und mit einem Außenlager an einer Feder abstützt, wobei das Außenlager um einen Federweg in Wirkrichtung der Feder verschiebbar ist, und sich zwischen Außen- und Innenlager an einem in axialer Richtung (bezogen auf die Kupplungsachse) festgelegten und in radialer Richtung verschiebbaren Lagerbock, der mittels einer motorisch angetriebenen Spindel radial um einen Verschiebeweg verschiebbar ist, an einem Drehpunkt abstützt, und das Innenlager um einen Ausrückweg verschiebbar ist, wobei ein Endanschlag eine Endstellung des Ausrückweges in einer ausgekuppelten Stellung vorgibt, wobei der Endanschlag in mindestens zwei Anschlagstellungen bringbar ist, die jeweils unterschiedliche Endstellungen des Ausrückweges in der ausgekuppelten Stellung bewirken, wobei der Endanschlag eine Kulissenführung mit einer Nut und einem Kulissenstein umfasst. Der Kulissenstein kann beispielsweise ein Stift sein. Der Kulissenstein ist vorzugsweise fest oder federelastisch mit dem Ausrückhebel verbunden und die Nut ist vorzugsweise gehäusefest angeordnet. Alternativ ist die Nut in einem gehäusefest schwenkbar gelagerten Hebel angeordnet.

Die Auslösung der Nachstellung wird bewirkt, sobald der Kupplungshub in der zugedrückten Stellung einen Grenzwert überschreitet. Eine der Endstellungen wird so gewählt, dass der Ausrückhub der Kupplung zwischen dem vollständig ausgekuppelten und dem vollständig eingekuppelten Zustand für die Auslösung der Selbstnachstellung nicht ausreicht, die andere Endstellung wird so gewählt, dass der Ausrückhub der Kupplung zwischen dem vollständig ausgekuppelten und dem vollständig eingekuppelten Zustand für die Auslösung der Selbstnachstellung ausreicht. Je nach Wahl der Endstellung wird also das Nachstellen der Kupplung ausgelöst oder unterbleibt.

Vorzugsweise ist vorgesehen, dass die Nut eine Arbeitsbahn umfasst, an deren unteren Ende eine Stufe angeordnet ist, die einen oberen Anschlag für den Kulissenstein bewirkt und an dessen oberen Ende eine Stufe angeordnet ist, die bei Überschreiten ein Rückgleiten des Kulissensteins in die Arbeitsbahn verhindert und den Kulissenstein in eine Ausgleichsbahn zwingt, deren unteres Ende einen unteren Anschlag für den Kulissenstein bildet, wobei eine Stufe ein Rückgleiten des Kulissensteins von dem unteren Ende in die Ausgleichsbahn verhindert, wobei die Stufe des unteren Endes der Arbeitsbahn durch eine Rampe mit dem unteren Ende der Ausgleichsbahn verbunden ist, die eine Bewegung des Kulissensteins vom unteren Ende der Ausgleichsbahn zum unteren Ende der Arbeitsbahn ermöglicht. Allein durch die Gestalt der Nut als Kulissenführung kann hier die Charakteristik der Nachstellungsauslösung verändert werden und kann so durch einfaches Ändern der Nutgeometrie an unterschiedliche Kupplungskennlinien angepasst werden.

In einer bevorzugten Ausführungsform ist vorgesehen, dass der Kulissenstein durch einen Federdraht gebildet wird, der so geformt ist, dass auf ein mit der Nut in Wirkverbindung stehendes Ende des Federdrahtes eine in axialer Richtung des Endes wirkende Druckkraft ausgeübt wird. Diese Ausführungsform ist besonders leicht zu fertigen.

Der Federdraht umfasst vorzugsweise eine Traverse, die von dem mit der Nut in Wirkverbindung stehenden Ende des Federdrahtes beabstandet ist und mittels einem ersten Schenkel mit diesem verbunden ist, sodass eine in axialer Richtung des mit der Nut in Wirkverbindung stehenden Endes des Federdrahtes wirkende Federkraft bewirkt wird. Die Traverse ist vorzugsweise radial und axial gegenüber der Grundplatte festgelegt drehbar gelagert. Die Traverse ist bevorzugt an ihrem dem ersten Schenkel abgewandten Ende drehfest mit der Grundplatte verbunden, sodass eine praktisch kraftlose radiale Verschiebung des mit der Nut in Wirkverbindung stehenden Endes des Federdrahtes verhindert wird.

Vorzugsweise ist vorgesehen, dass die Drehfeste Verbindung mittels eines zweiten Schenkels erfolgt, der an seinem der Traverse abgewandten Ende an der Grundplatte festgelegt ist. Dadurch wird eine einfache und kostengünstige Bauweise von Ausrückhebel und Federdraht erreicht.

Vorzugsweise ist vorgesehen, dass der erste und/oder zweite Schenkel im Bereich des Übergangs in die Traverse so gebogen sind, dass die Schenkel und die Traverse auf verschiedenen Seiten des Ausrückhebels verlaufen. Dies vereinfacht die Gestaltung der Befestigung des Federdrahtes an dem Ausrückhebel.

Der erste Schenkel und der zweite Schenkel sind vorzugsweise durch Durchbrüche in dem Ausrückhebel geführt, wobei der erste Durchbruch für den erste Schenkel bevorzugt eine Öffnungsweite aufweist, die größer als ein Durchmesser des Federdrahtes ist und der zweite Durchbruch für den zweiten Schenkel bevorzugt ein Langloch ist, dessen kleinste Öffnungsweite dem Durchmesser des Federdrahtes entspricht. Diese Maßnahme bewirkt eine Bewegbarkeit des Kulissensteins in alle Richtungen gegen Federkraft bei einfacher Bauweise und Montage.

Im Folgenden werden Ausführungsbeispiele der Erfindung anhand der beiliegenden Zeichnungen erläutert. Dabei zeigen:
Fig. 1 ein Diagramm eines Einrückweges einer Kupplung im Antriebsstrang eines Fahrzeuges über der Einrückkraft;
Fig. 2 eine Prinzipdarstellung eines ersten Ausführungsbeispiels eines erfindungsgemäßen Wipphebelaktors in einer ersten Stellung;
Fig. 3 eine Prinzipdarstellung Ausführungsbeispiels gemäß Fig. 2 in einer zweiten Stellung;
Fig. 4 eine Prinzipdarstellung des Ausführungsbeispiels gemäß Fig. 2 in einer dritten Stellung;
Fig. 5a) - 8d) ein zweites Ausführungsbeispiel eines erfindungsgemäßen Wipphebelaktors mit einer ersten Ausführungsform einer Kulisse;
Fig. 6a den Hebel mit der darin angeordneten Nut in vergrößerter Darstellung;
Fig. 6b einen Schnitt A-A gemäß Fig. 6a;
Fig. 6c einen Schnitt B-B gemäß Fig. 6a;
Fig. 7 eine räumliche Darstellung des zweiten Ausführungsbeispiels eines erfindungsgemäßen Wipphebelaktors mit einer zweiten Ausführungsform einer Kulisse;
Fig. 8 eine Aufsicht auf das Ausführungsbeispiel der Fig. 7;
Fig. 9 eine Detailansicht der Kulisse;
Fig. 10 eine räumliche Darstellung von Grundplatte und Federdraht;
Fig. 11 eine räumliche Darstellung des Federdrahtes allein;

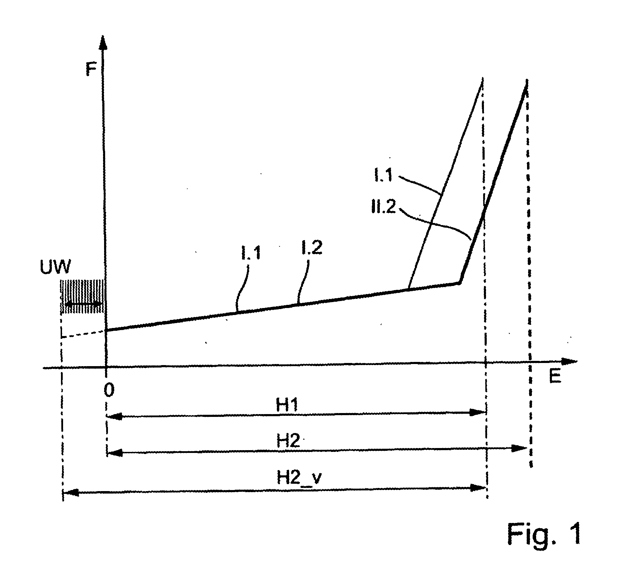

Fig. 1 zeigt ein Diagramm eines Einrückweges Ew, aufgetragen über der Ordinate, über der Einrückkraft Ef, aufgetragen über der Abszisse Einrückweges einer Kupplung im Antriebsstrang eines Fahrzeuges. Eine Kurve I gibt die Kupplungskennlinie bei einer Kupplung ohne Verschleiß wieder. Diese beginnt bei einem Einrückweg Ew = 0 und einer definierten Einrückkraft Ef , steigt als Kurve 1.1 linear an, um zum Ende des Kupplungseinrückweges ab einem Wert Ew1 sprungartig in einen Ast 1.2 zu einem größeren Gradienten überzugehen. Bei einer verschlissenen Kupplung wird diese Kennlinie entlang des Astes I.1 verschoben, dies ist durch die Kennlinie II mit den Ästen II.1 und II.2 dargestellt.

Die Verschleißnachstellung der Kupplung, es handelt sich hier z.B. um eine Kupplung (wie sie beispielsweise aus der DE 10 2005 003 505 A1 oder DE 10 2005 058 844 A1 bekannt ist), erfolgt bei einem definierten Hub der Kupplung. Bei der Kupplungskennlinie ohne Verschleiß I reicht der Hub H1 nicht aus, um die Verschleißnachstellung zu aktivieren. Bei der Kupplungskennlinie II einer verschlissenen Kupplung reicht der Hub H2 hingegen aus, um die Verschleißnachstellung zu aktivieren. Die Verschleißnachstellung kann allerdings auch aktiviert werden, indem der Hub ausgehend von einer nicht verschlissenen Kupplung, mithin der Kupplungskennlinie I, aktiv erhöht wird. Dies kann zum Beispiel durch einen Überweg Uw bei geöffneter Kupplung erfolgen. Durch den initiierten Überweg Uw bei geöffneter Kupplung, dieser ist als Uw in Fig. 1 dargestellt, kann der Nachstellhub der Kupplung verschoben werden. Somit verändert sich die Zungenposition in Einbaulage bei geöffneter Kupplung je nach initiiertem Überweg Uw. Bei schließender Kupplung wird die Nachstellposition erreicht bei dem Hub H2_V. Dadurch wird ein Nachstellen der Kupplung ausgelöst. Der initiierte Überweg Uw wird insbesondere an Hebelaktoren gemäß der vorliegenden Erfindung durch einen verschiebbaren Endanschlag des Aktors realisiert. Voraussetzung ist, dass die Kupplung den Aktor stets bis an den variablen Endanschlag drückt, das heißt die Kupplungskraft ist bezogen auf den Endanschlag stets größer als die Aktorkraft oder der Aktor drückt sich selbständig in diese Position.

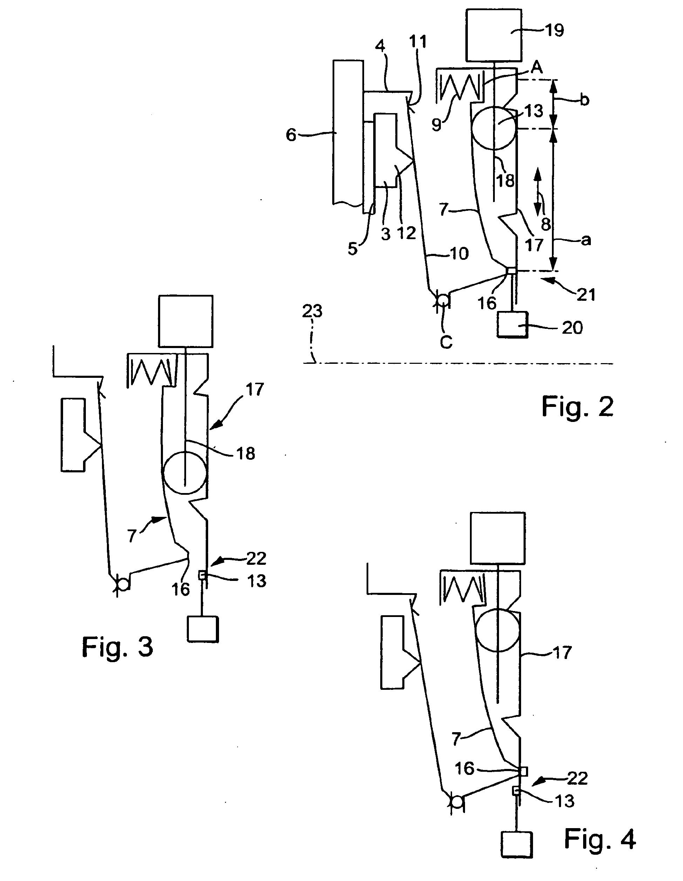

Die Figuren 2 bis 4 zeigen eine Prinzipdarstellung eines ersten Ausführungsbeispiels einer erfindungsgemäßen Ausrückvorrichtung, eines so genannten Wipphebelaktors. Anhand Fig. 2 wird der prinzipielle Aufbau des Ausführungsbeispiels der erfindungsgemäßen Ausrückvorrichtung erläutert. Obwohl die meisten der Einzelteile bzw. Baugruppen rotationssymmetrisch zu einer Drehachse R einer hier nicht näher dargestellten Kurbelwelle bzw. Getriebeeingangswelle sind, wurde auf diese Darstellung der Übersichtlichkeit halber bewusst verzichtet.

Eine Kupplung 2 umfasst im Wesentlichen eine Druckplatte 3, eine Gegendruckplatte 6 sowie eine zwischen Druckplatte 3 und Gegendruckplatte 6 angeordnete Kupplungsscheibe 5. Die Kupplungsscheibe 5 ist mit der hier nicht dargestellten Getriebeeingangswelle drehfest verbunden, die Gegendruckplatte 6 ist mit der hier nicht dargestellten Kurbelwelle verbunden und die Druckplatte 3 ist mit der Gegendruckplatte 6 axial in Richtung der Drehachse verschiebbar, jedoch gegenüber der Gegendruckplatte 6 drehfest, gelagert. Durch Aufdrücken der Druckplatte 3 auf die Gegendruckplatte 6 wird die Kupplungsscheibe 5 zwischen beiden eingeklemmt, so dass durch die auftretende (trockene) Reibung ein Drehmoment zwischen Gegendruckplatte 6 und Kupplungsscheibe 5 übertragen werden kann.

An der Gegendruckplatte 6 ist ein Kupplungsdeckel 4 angeordnet, welcher eine radial nach innen gerichtete Andruckscheibe 11 aufweist. An dieser stützt sich eine Tellerfeder 10 ab, die sich des Weiteren an einem Druckring 12 der Druckplatte 3 abstützt. Wird der radial innere Bereich der Tellerfeder 10 zum Beispiel mit einem hier schematisch dargestellten Ausrücklager 14, in der Darstellung der Figuren 2 bis 4, nach links gedrückt, so wird die Druckplatte 3 gegen die Gegendruckplatte 6 gedrückt, so dass die Kupplung geschlossen wird und ein Drehmoment zwischen Gegendruckplatte 6 und Kupplungsscheibe 5 übertragen werden kann. Es handelt sich hier also um eine aktiv zugedrückte Kupplung.

Im Folgenden soll die Wirkungsweise der Ausrückvorrichtung beschrieben werden. Diese dient dazu, mittels des Ausrücklagers 14 die Tellerfeder 10 zwischen einer ausgekuppelten Stellung und einer eingekuppelten Stellung zu bewegen. Die ausgekuppelte Stellung ist in Fig. 2, die eingekuppelte Stellung in Fig. 3 dargestellt. Die Betätigung des Ausrücklagers 14 erfolgt mit einem Ausrückhebel 7. Der Ausrückhebel 7 stützt sich mit einem Innenlager C an dem Ausrücklager 14 ab und an einem Außenlager A an der Feder 9. Beide Lagerstellen sind hier nur schematisch angedeutet, es handelt sich hier um Lager, die den Ausrückhebel in radialer Richtung sowie in Umfangsrichtung festlegen. Die Tellerfeder 10 übt auf das Ausrücklager 14 eine in der Darstellung der Figuren 2 bis 4 nach rechts gerichtete Kraft aus, die Feder 9 übt auf das Außenlager A ebenfalls eine nach rechts gerichtete Kraft aus. Um an dem Innenlager C eine in der Darstellung der Fig. 2 nach links gerichtete Kraft auf das Ausrücklager 14 auszuüben, ist nun ein Gegenlager B zwischen dem Innenlager C und dem Außenlager A angeordnet, so dass der Ausrückhebel 7 nach Art einer Wippe betätigt werden kann. Das Gegenlager B ist radial verschiebbar angeordnet. Das Gegenlager B wird gebildet von einem schematisch dargestellten Lagerbock 15 mit Rollen, auf denen sich der Ausrückhebel 7 abstützt, sowie Rollen, mit denen sich der Lagerbock 15 an einer Kupplungs- bzw. getriebegehäusefest angeordneten Abstützung 17 abstützt. Der Lagerbock 15 umfasst eine Gewindebohrung, in die eine Spindel 18, die durch einen Elektromotor 19 gedreht werden kann, eingreift und so einen Aktor zur Betätigung der Kupplung bildet. Durch Drehen der Spindel 18 kann der Lagerbock 15 in -bezogen auf die Kupplungsachse radialer- Richtung des Doppelpfeils 8 verschoben werden.

Der Gesamtabstand zwischen innerer Lagerstelle C und äußerer Lagerstelle A wird durch die Stellung des Gegenlagers B aufgeteilt in einen der Feder 9 zugeordneten Hebelarm b und einen dem Ausrücklager 14 zugeordneten Hebelarm a. Das Verhältnis der auf das Ausrücklager 14 ausgeübten Kraft zu der Federkraft 9 entspricht dem Verhältnis der beiden Hebelarme b gegenüber b nach bekannten Hebelgesetzen. Je weiter der Gegenlagerpunkt B von dem Außenlager A verrückt wird, desto geringer wird die auf das Ausrücklager 14 ausgeübte Kraft.

Ein Endanschlag 13 begrenzt den Einrückweg Ew der Kupplung bzw. des Ausrücklagers 14. In der vollständig geöffneten Stellung der Kupplung, wie diese beispielsweise in Fig. 1 dargestellt ist, liegt eine Anschlagfläche 16 des Ausrückhebels 7 an dem Endanschlag 13 an. Der Endanschlag 13 kann sich gehäusefest abstützen, beispielsweise an der Abstützung 17, kann aber ebenso durch jede beliebige andere gehäusefeste Abstützung einen Anschlag bewirken. Der Endanschlag 13 kann nun aus der in Fig. 1 dargestellten Position, bei der die Anschlagfläche 16 in der geöffneten Kupplungsstellung an dem Endanschlag anliegt, in eine Stellung verschoben werden, bei der der Endanschlag 13 bei geöffneter Kupplung nicht mehr von der Anschlagfläche 16 berührt wird, so dass der Ausrückhebel 7 einen größeren Weg in Richtung der Kupplungsöffnung zurücklegen kann, dies ist in Fig. 2 dargestellt. Bei der Position des Endanschlags 13 gemäß der Darstellung der Fig. 2 wird der initiierte Überweg U_{w} gemäß Fig. 1 ermöglicht, dies ist in Fig. 3 dargestellt. Wird die Kupplung nun ausgehend von der Fig. 3 geschlossen, so reicht der Hub zur Auslösung der Verschleißnachstellung aus. Bei teilweise oder vollständig geschlossener Kupplung wird der Endanschlag wieder in die erste Position, wie diese in Fig. 1 dargestellt ist, zurückgeschoben. Durch willkürliches Verschieben des Endanschlags 13 in die zweite Position gemäß Fig. 2 und 3 kann so eine Verschleißnachstellung ausgelöst werden, da durch den initiierten Überweg Uw der Hub zur Auslösung der Verschleißnachstellung H2 beim Schließen der Kupplung erreicht werden kann..

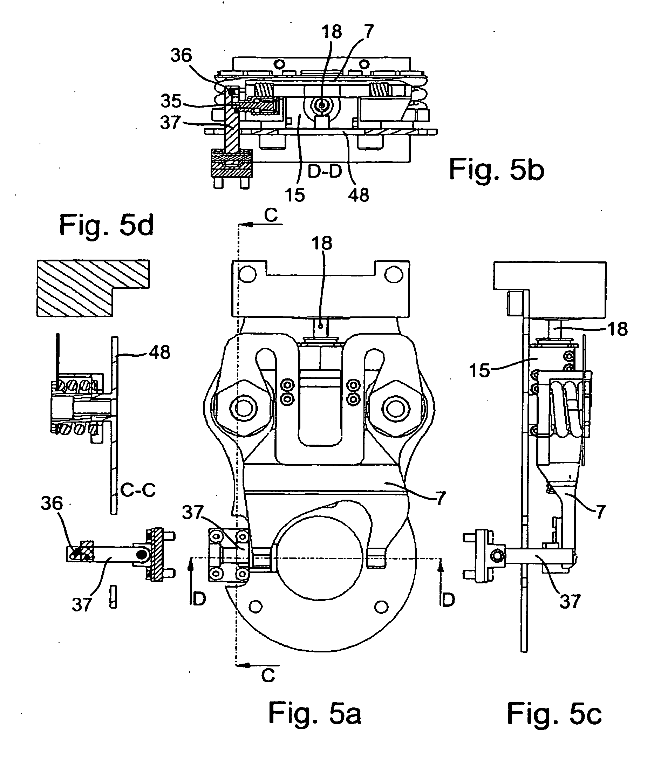

Fig. 5 zeigt ein Ausführungsbeispiel der Erfindung. Fig. 5a zeigt ein Hebelsystem in der Aufsicht, Fig. 5b zeigt einen Schnitt D-D gemäß Fig. 5a, Fig. 5c zeigt eine Seitenansicht, Fig. 5d zeigt einen Schnitt C-C gemäß Fig. 5a. Unterschiedliche Anschlagpositionen des Ausrückhebels 7 werden hier durch eine Kulissenführung erreicht. Die gegenüber der Prinzipskizze der Fig. 2 bis 4 gleichen Bauelemente bzw. Baugruppen sind wie in Fig. 1 bis 4 bezeichnet. An dem Ausrückhebel 7 ist ein Kulissenstein in Form eines Stiftes 35 angeordnet, der in eine Nut 36 eingreift und mit dieser zusammen eine Kulissenführung bildet. Die Nut 36 ist in einem gehäusefest drehbar angeordneten Hebel 37 eingebracht. Bei einer radialen Verschiebung des Lagerbockes 15 verschiebt sich der Stift 36 in axialer Richtung, dies ist in Fig. 5b durch einen Doppelpfeil 38 bezeichnet.

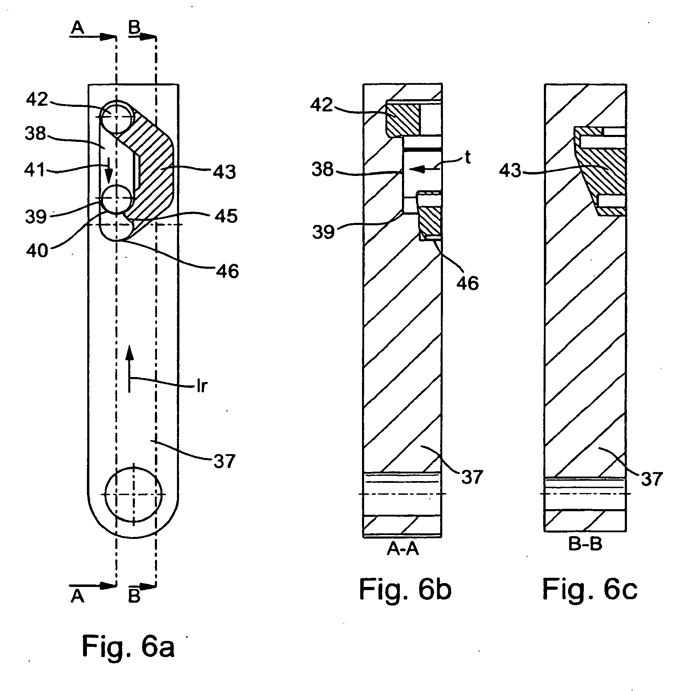

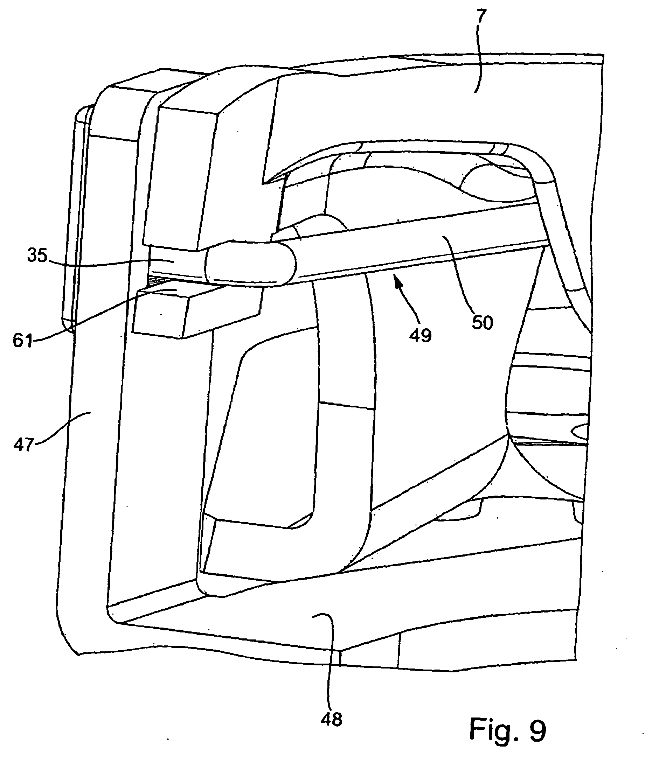

Fig. 6a zeigt den Hebel 37 mit der darin angeordneten Nut 36 in vergrößerter Darstellung entsprechend der Ansicht der Fig. 5d. Fig. 6b zeigt einen Schnitt A-A gemäß Fig. 6a, Fig. 6c zeigt einen Schnitt B-B gemäß Fig. 6a. Die Nut 36 ist, wie aus den Figuren 9a bis 9c zu erkennen ist, als eine geschlossene Kurve ausgelegt, die unterschiedliche Nuttiefen t aufweist. Die Nut 36 besteht aus einer Arbeitsbahn 38, die in Längsrichtung Ir des Hebels 37 verläuft. An einem unteren Ende 39 ist ein Anschlag 40 angeordnet, der ein Überschreiten des Anschlags in Richtung des Pfeils 41 für den Stift 35 verhindert. An einem oberen Ende 42 ist ebenfalls ein Anschlag angebracht, dieser ist in Form einer Stufe ausgebildet ausgeführt, in die der Stift 35 bei Erreichen des oberen Anschlags 42 in Tiefenrichtung t der Nut 37 bewegt. Dadurch wird ein Rückleiten in Richtung des Pfeils 41 entlang der Arbeitsbahn 39 verhindert. Die Nut 36 verzweigt nun in einer Ausgleichsbahn 43, die, wie aus Fig. 6b und insbesondere 9c zu erkennen ist, das obere Ende 44 der Arbeitsbahn 38 mit dem unteren Ende 39 verbindet und dabei im Wesentlichen bogenförmig verläuft. Die Tiefe t der Nut nimmt dabei von dem oberen Ende bis zum unteren Ende 39 ab. Wandert der Stift 35 also entlang der Ausgleichsbahn 43 vom oberen Ende 44 der Nut 36 zum unteren Ende 39 der Nut 36, so nimmt die Tiefe der Nut dabei ab. Vor dem unteren Ende 39 ist eine weitere Kante 45 in der Ausgleichsbahn 43 angeordnet, deren Überschreiten bewirkt, dass der Stift 35 in die dadurch gebildete Vertiefung fällt und so ein Zurückleiten vom unteren Ende 39 in die Ausgleichsbahn 43 verhindert wird. Nunmehr hat der Stift nur noch die Möglichkeit, in Richtung der Arbeitsbahn 38 zu gleiten und überschreitet die zu dem unteren Anschlag 40 gehörende Kante. Die Nut 36 verfügt so über zwei Anschlagstellungen für den Kulissenstein bzw. Stift 35, dies ist einmal der untere Anschlag 40 als erste Anschlagstellung und zum anderen das untere Ende 46 der Ausgleichsbahn 43. Letzteres kann nur erreicht werden, wenn die Arbeitsbahn 38 bis zu ihrem oberen Ende 39 durchlaufen wird, so dass der Stift 35 in die Ausgleichsbahn 43 gezwungen wird und nach Entlanggleiten in Richtung des unteren Endes 46 der Ausgleichsbahn und Überschreiten der Kante 45 am unteren Ende 46 der Ausgleichsbahn als zweite Anschlagstellung erreicht.

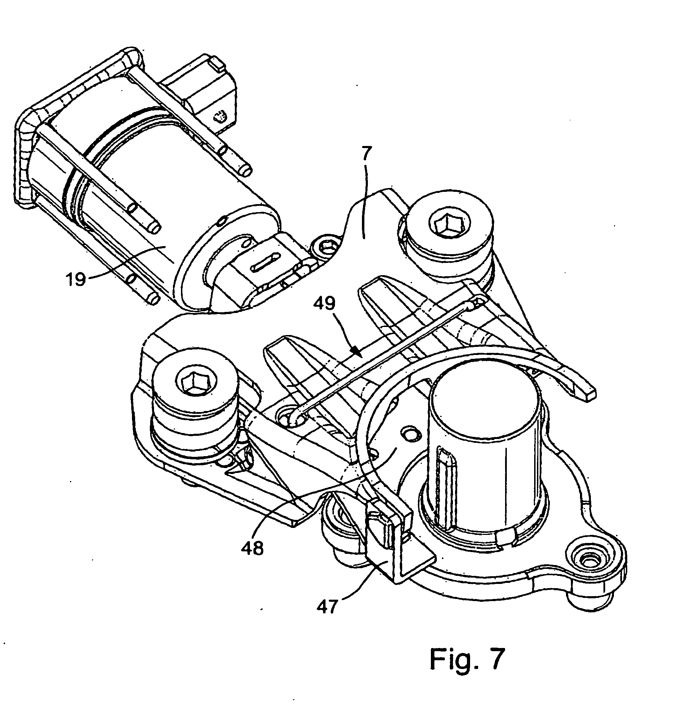

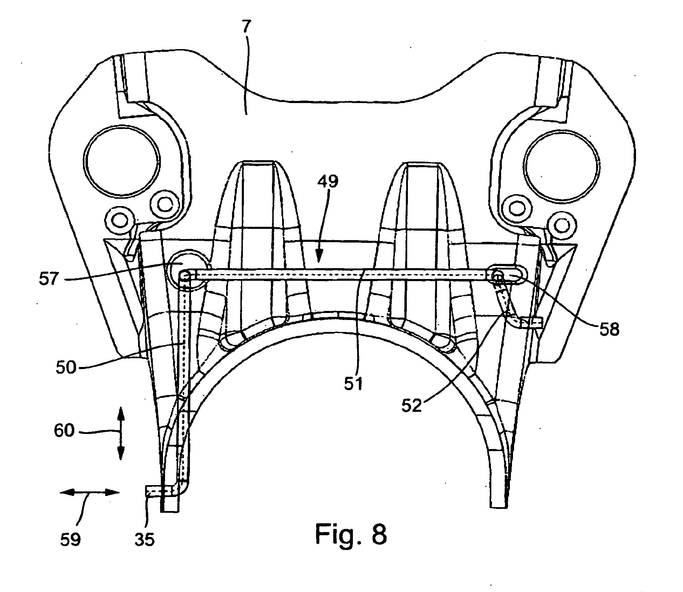

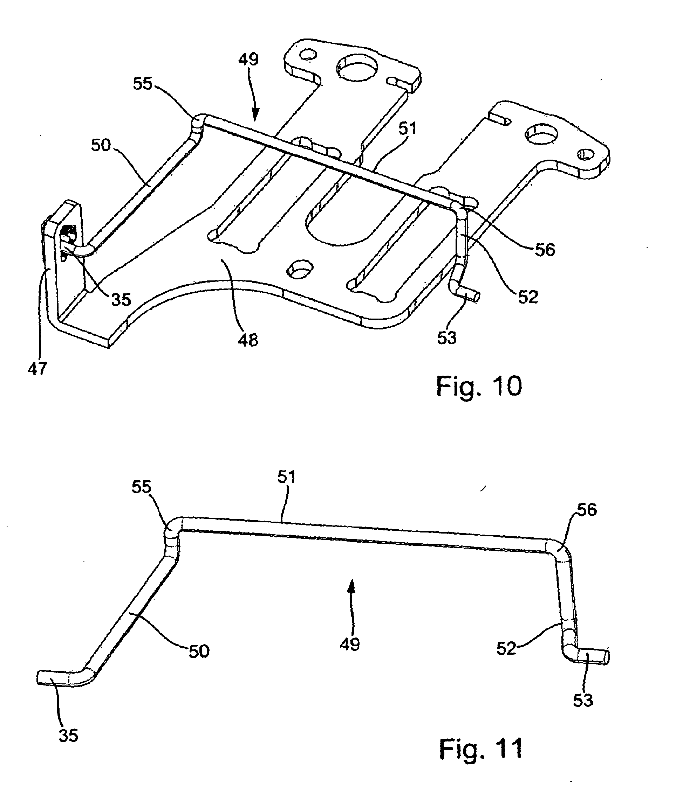

Die Figuren 10 bis 14 zeigen ein alternatives Ausführungsbeispiel eines Endanschlags ähnlich dem zuvor dargestellten Ausführungsbeispiel. Fig. 7 zeigt eine räumliche Darstellung der Ausrückvorrichtung, Fig. 8 eine Aufsicht, Fig. 9 eine Detailansicht der Kulisse, Fig. 10 eine räumliche Darstellung von Grundplatte und Federdraht, Fig. 11 eine räumliche Darstellung des Federdrahtes allein. Auch hier ist ein Kulissenstein in Form eines Stifts mit dem Ausrückhebel 7 verbunden, eine Nut als Kulissenbahn ist hier gehäusefest, beispielsweise mit einer Grundplatte, die die Abstützung 17 trägt, verbunden und nicht wie in dem zuvor dargestellten Beispiel drehbeweglich mit dieser verbunden. Fig. 7 zeigt dieses Ausführungsbeispiel in einer räumlichen Darstellung. Statt des Hebels 37 ist hier eine Platte 47, die die Nut 36 trägt, fest mit einer Grundplatte 48, wie diese beispielsweise als Einzelteile in Fig. 10 erkennbar sind, verbunden. Den Stift 35, der den Kulissenstein der Kulisse bildet, trägt hier ein Federdraht 49, der an dem Ausrückhebel 7 festgelegt ist. Die Grundplatte 48 trägt auch die Abstützung 17 gemäß der Darstellung der Figuren 2 bis 4. Der Federdraht 49 ist in einer Aufsicht wie diese in Fig. 8 dargestellt ist, im Wesentlichen U-förmig gebogen und umfasst neben dem Stift 35 einen ersten Schenkel 50, der sich in einem etwa 90° Winkel von dem Stift 35 aus erstreckt und in eine Traverse 51 übergeht, die etwa parallel, aber beabstandet von dem Stift 35 verläuft und deren Ende wiederum in einen zweiten Schenkel 52 übergeht, der einen Befestigungsstift 53 an seinem Ende trägt. Der Befestigungsstift 53 greift in eine Bohrung 54 in den Ausrückhebel 7 ein. Der erste Schenkel 50 weist im Bereich des Übergangs auf die Traverse 51 einen abgewinkelten Bereich 55 auf, der in Richtung einer auf der Grundplatte 48 errichteten Senkrechten abgewinkelt ist. In gleicher Richtung ist auch ein abgewinkelter Bereich 56 des zweiten Schenkels 52 abgewinkelt. Dadurch ist es möglich, dass die beiden Schenkel 50, 52 auf der der Grundplatte 48 zugewandten Seite des Ausrückhebels 7 verlaufen, die Traverse 51 aber auf der der Grundplatte 48 abgewandten Seite des Ausrückhebels 7. Dazu umfasst der Ausrückhebel 7 zwei Durchbrüche, nämlich einen dem ersten Schenkel 50 zugeordneten Durchbruch 57 und einen dem zweiten Schenkel 52 zugeordneten zweiten Durchbruch 58. Der erste Durchbruch 57 ist eine im Wesentlichen kreisrunde Bohrung mit einem Durchmesser, der wesentlich größer ist als der Durchmesser des Federdrahtes 49, der zweite Durchbruch 58 ist im Wesentlichen ein Langloch mit einem minimalen Durchmesser, der nur unwesentlichen größer ist als der Durchmesser des Federdrahtes 49. Der Ausrückhebel 7 umfasst, wie in der Detaildarstellung Fig. 9, die eine Detailansicht der Kulisse zeigt, eine Führung 61 im Hebel 7. Die Führung 61 ist eine Nut oder ein Langloch, das in Richtung des ersten Schenkels 50 verläuft. Durch diese Anordnung ist der Stift 35 gegen Federkraft sowohl in seiner axialen Richtung, diese ist in Fig. 8 mit einem Doppelpfeil 59 gekennzeichnet, als auch in radialer Richtung parallel zur Grundplatte 48, diese ist mit einem Doppelpfeil 60 in Fig. 8 gekennzeichnet, beweglich und radial senkrecht zur Richtung des Doppelpfeils 60 zumindest bedingt bis zum Anschlagen an die Grundplatte 48 bzw. den Ausrückhebel 7 beweglich. Es ist also ein Ende des Federdrahtes 49 in dem Ausrückhebel 7 fest eingehängt und das andere Ende in jeder Richtung federnd bewegbar. Das federnde Ende ist in der Kulissenbahn eingehängt und wirkt durch einen Schlitz im Ausrückhebel, dies ist der Durchbruch 58. In den zwei anderen Richtungen wird der Federdraht 49 durch die Einhängung vorgespannt, so bildet das federnde Drahtende den Stift 35.

### Bezugszeichenliste

- A: äußere Lagerstelle
- B: Drehpunkt
- C: Innenlager
- S: Verschiebeweg
- Lf: Federweg
- 2: Kupplung
- 3: Druckplatte
- 4: Kupplungsdeckel
- 5: Kupplungsscheibe
- 6: Gegendruckplatte
- 7: Ausrückhebel
- 8: Doppelpfeil
- 9: Feder
- 10: Tellerfeder
- 11: Andruckscheibe
- 12: Druckring
- 13: Endanschlag
- 14: Ausrücklager
- 15: Lagerbock
- 16: Anschlagfläche
- 17: Abstützung
- 18: Spindel
- 19: Elektromotor
- 20: Elektrischer Aktor für Endanschlag 13
- 21: Erste Anschlagstellung
- 22: Zweite Anschlagstellung
- 35: Kulissenstein/Stift
- 36: Nut
- 37: Hebel
- 38: Arbeitsbahn
- 39: Unteres Ende
- 40: Unterer Anschlag
- 41: Pfeil
- 42: Oberer Anschlag
- 43: Ausgleichsbahn
- 44: Oberes Ende
- 45: Kante
- 46: Unteres Ende der Ausgleichsbahn
- 47: Platte
- 48: Grundplatte
- 49: Federdraht
- 50: Erster Schenkel
- 51: Traverse
- 52: Zweiter Schenkel
- 53: Befestigungsstift
- 54: Bohrung
- 55: Abgewinkelter Bereich
- 56: Abgewinkelter Bereich
- 57: Durchbruch
- 58: Durchbruch
- 59: Doppelpfeil
- 60: Doppelpfeil
- 61: Führung am Hebel
- 62: Druckhülse
- 63: Gehäuse
- 64: Außenfeder
- 65: Innenfeder
- 66: Steuerkantenhülse
- 67: Schalthülse
- 68: Dichtung
- 69: Kantenträger

## Patentansprüche

1. Ausrückvorrichtung zur Betätigung einer Kupplung, insbesondere einer Kupplung im Antriebsstrang eines Kraftfahrzeuges zwischen Antriebsmotor und Schaltgetriebe, umfassend einen Ausrückhebel (7), der sich mit einem Innenlager (C) an einem Ausrücklager (14) und mit einem Außenlager (A) an einer Feder (9) abstützt, wobei das Außenlager (A) um einen Federweg (LF) in Wirkrichtung der Feder (9) verschiebbar ist, und sich zwischen Außen- und Innenlager (A, C) an einem in axialer Richtung festgelegten und in radialer Richtung verschiebbaren Lagerbock (15), der mittels einer motorisch (19) angetriebenen Spindel (18) radial um einen Verschiebeweg (S) verschiebbar ist, an einem Drehpunkt (B) abstützt, und das Innenlager (C) um einen Ausrückweg verschiebbar ist, wobei ein Endanschlag (13) eine Endstellung des Ausrückweges in einer ausgekuppelten Stellung vorgibt, wobei der Endanschlag (13) in mindestens zwei Anschlagstellungen (21, 22) bringbar ist, die jeweils unterschiedliche Endstellungen des Ausrückweges in der ausgekuppelten Stellung bewirken, **dadurch gekennzeichnet, dass** der Endanschlag (13) eine Kulissenführung mit einer Nut (36) und einem Kulissenstein (35) umfasst.

2. Ausrückvorrichtung nach Anspruch 1 **dadurch gekennzeichnet, dass** der Kulissenstein (35) fest mit dem Ausrückhebel (7) verbunden ist und die Nut (36) gehäusefest angeordnet ist.

3. Ausrückvorrichtung nach Anspruch 2, **dadurch gekennzeichnet, dass** die Nut (36) in einem gehäusefest schwenkbar gelagerten Hebel (37) angeordnet ist.

4. Ausrückvorrichtung nach Anspruch 2 oder 3, **dadurch gekennzeichnet, dass** die Nut (36) eine Arbeitsbahn (38) umfasst, an deren unteren Ende (39) eine Stufe angeordnet ist, die einen oberen Anschlag (42) für den Kulissenstein (35) bewirkt und an dessen oberen Ende (44) eine Stufe angeordnet ist, die bei Überschreiten ein Rückgleiten des Kulissensteins (35) in die Arbeitsbahn (38) verhindert und den Kulissenstein (35) in eine Ausgleichsbahn (43) zwingt, deren unteres Ende einen unteren Anschlag für den Kulissenstein (35) bildet, wobei eine Stufe ein Rückgleiten des Kulissensteins (35) von dem unteren Ende (39) in die Ausgleichsbahn (43) verhindert, wobei die Stufe des unteren Endes der Arbeitsbahn (38) durch eine Rampe mit dem unteren Ende der Ausgleichsbahn (43) verbunden ist, die eine Bewegung des Kulissensteins (35) vom unteren Ende der Ausgleichsbahn (43) zum unteren Ende der Arbeitsbahn (38) ermöglicht.

5. Ausrückvorrichtung nach einem der Ansprüche 1 bis 4, **dadurch gekennzeichnet, dass** der Kulissenstein (35) durch einen Federdraht (49) gebildet wird, der so geformt ist, dass auf ein mit der Nut (36) in Wirkverbindung stehendes Ende des Federdrahtes (49) eine in axialer Richtung des Endes wirkende Druckkraft ausgeübt wird.

6. Ausrückvorrichtung nach Anspruch 5, **dadurch gekennzeichnet, dass** der Federdraht (49) eine Traverse (51) umfasst, die von dem mit der Nut (36) in Wirkverbindung stehenden Ende des Federdrahtes (49) beabstandet ist und mittels einem ersten Schenkel (50) mit diesem verbunden ist.

7. Ausrückvorrichtung nach Anspruch 6, **dadurch gekennzeichnet, dass** die Traverse (51) radial und axial gegenüber der Grundplatte (48) festgelegt drehbar gelagert ist.

8. Ausrückvorrichtung nach Anspruch 7, **dadurch gekennzeichnet, dass** die Traverse (51) an ihrem dem ersten Schenkel (50) abgewandten Ende drehfest mit der Grundplatte (48) verbunden ist.

9. Ausrückvorrichtung nach Anspruch 8, **dadurch gekennzeichnet, dass** die drehfeste Verbindung mittels eines zweiten Schenkels (52) erfolgt, der an seinem der Traverse (51) abgewandten Ende an der Grundplatte (48) festgelegt ist.

10. Ausrückvorrichtung nach einem der Ansprüche 5 bis 9, **dadurch gekennzeichnet, dass** der erste und/oder zweite Schenkel (50, 52) im Bereich des Übergangs in die Traverse (51) so gebogen sind, dass die Schenkel (50, 52) und die Traverse (51) auf verschiedenen Seiten des Ausrückhebels (7) verlaufen.

11. Ausrückvorrichtung nach Anspruch 10, **dadurch gekennzeichnet, dass** der erste Schenkel (50) und der zweite Schenkel (52) durch Durchbrüche (57, 58) in dem Ausrückhebel (7) geführt sind.

12. Ausrückvorrichtung nach Anspruch 11, **dadurch gekennzeichnet, dass** der erste Durchbruch (57) für den erste Schenkel (50) eine Öffnungsweite aufweist, die größer als ein Durchmesser des Federdrahtes(49) ist und der zweite Durchbruch (58) für den zweiten Schenkel (52) ein Langloch ist, dessen kleinste Öffnungsweite dem Durchmesser des Federdrahtes entspricht.

## Claims

1. Disengaging device for actuating a clutch, in particular a clutch in the drive train of a motor vehicle between a drive engine and a gearbox, comprising a disengaging lever (7) which is supported with an inner bearing (C) on a disengaging bearing (14) and with an outer bearing (A) on a spring (9), with the outer bearing (A) being movable by a spring travel (LF) in the direction of action of the spring (9) and being supported between the outer and inner bearings (A, C) on a bearing block (15), which is fixed in the axial direction and is movable in the radial direction and can be moved radially by a movement travel (S) by means of a spindle (18) which is driven by a motor (19), at a centre of rotation (B), and with the inner bearing (C) being movable by a disengaging travel, with an end stop (13) defining an end position of the disengaging travel in a decoupled position, with it being possible for the end stop (13) to be placed in at least two stop positions (21, 22) which in each case form different end positions of the disengaging travel in the decoupled position, **characterized in that** the end stop (13) comprises a slotted guide with a groove (36) and a sliding block (35).

2. Disengaging device according to Claim 1, **characterized in that** the sliding block (35) is connected in a fixed manner to the disengaging lever (7) and the groove (36) is arranged in a fixed manner with respect to a housing.

3. Disengaging device according to Claim 2, **characterized in that** the groove (36) is arranged in a lever (37) which is pivotably mounted in a fixed manner with respect to a housing.

4. Disengaging device according to Claim 2 or 3, **characterized in that** the groove (36) comprises a working track (38), at the lower end (39) of which working track (38) is arranged a step which forms an upper stop (42) for the sliding block (35) and at the upper end (44) of which working track (38) is arranged a step which, when overshot, prevents the sliding block (35) from sliding back into the working track (38) and forces the sliding block (35) into a compensating track (43), the lower end of which forms a lower stop for the sliding block (35), with a step preventing the sliding block (35) from sliding back from the lower end (39) into the compensating track (43), with the step of the lower end of the working track (38) being connected by means of a ramp to the lower end of the compensating track (43), which ramp allows the sliding block (35) to move from the lower end of the compensating track (43) to the lower end of the working track (38).

5. Disengaging device according to one of Claims 1 to 4, **characterized in that** the sliding block (35) is formed by a spring wire (49) which is shaped such that an end, which is operatively connected to the groove (36), of the spring wire (49) is acted on with a pressure force acting in the axial direction of the end.

6. Disengaging device according to Claim 5, **characterized in that** the spring wire (49) comprises a traverse (51) which is spaced apart from that end of the spring wire (49) which is operatively connected to the groove (36), said traverse (51) being connected to said end by means of a first limb (50).

7. Disengaging device according to Claim 6, **characterized in that** the traverse (51) is rotatably mounted in a radially and axially fixed manner with respect to the base plate (48).

8. Disengaging device according to Claim 7, **characterized in that** the traverse (51) is connected in a rotationally fixed manner, at its end facing away from the first limb (50), to the base plate (48).

9. Disengaging device according to Claim 8, **characterized in that** the rotationally fixed connection takes place by means of a second limb (52) which is fixed, at its end facing away from the traverse (51), to the base plate (48).

10. Disengaging device according to one of Claims 5 to 9, **characterized in that** the first and/or second limbs (50, 52) are bent in the region of the transition into the traverse (51), in such a way that the limbs (50, 52) and the traverse (51) run on different sides of the disengaging lever (7).

11. Disengaging device according to Claim 10, **characterized in that** the first limb (50) and the second limb (52) are guided through apertures (57, 58) in the disengaging lever (7).

12. Disengaging device according to Claim 11, **characterized in that** the first aperture (57) for the first limb (50) has an opening width which is greater than a diameter of the spring wire (49) and the second aperture (58) for the second limb (52) is a slot whose smallest opening width corresponds to the diameter of the spring wire.

## Revendications

1. Dispositif de débrayage pour actionner un embrayage, en particulier un embrayage dans une ligne d'entraînement d'un véhicule automobile entre le moteur d'entraînement et la boîte de vitesses, comprenant un levier de débrayage (7), qui prend appui par un palier intérieur (C) sur un palier de débrayage (14) et par un palier extérieur (A) sur un ressort (9), dans lequel le palier extérieur (A) peut être déplacé d'une course de ressort (LF) dans la direction d'action du ressort (9), et s'appuie en un point de rotation (B) entre les paliers extérieur et intérieur (A, C) sur un support de palier (15) immobilisé en direction axiale et mobile en direction radiale, qui est déplaçable radialement d'une course de déplacement (S) au moyen d'une broche (18) entraînée par un moteur (19), et le palier intérieur (C) peut être déplacé d'une course de débrayage, dans lequel une butée d'extrémité (13) prédétermine une position finale de la course de débrayage dans une position débrayée, dans lequel la butée d'extrémité (13) peut être amenée dans au moins deux positions de butée (21, 22), qui entraînent respectivement des positions finales différentes de la course de débrayage dans la position débrayée, **caractérisé en ce que** la butée d'extrémité (13) comprend un guide à coulisse avec une rainure (36) et un coulisseau (35).

2. Dispositif de débrayage selon la revendication 1, **caractérisé en ce que** le coulisseau (35) est solidaire du levier de débrayage (7) et la rainure (36) est solidaire du boîtier.

3. Dispositif de débrayage selon la revendication 2, **caractérisé en ce que** la rainure (36) est disposée dans un levier (37) monté de façon pivotante solidairement au boîtier.

4. Dispositif de débrayage selon la revendication 2 ou 3, **caractérisé en ce que** la rainure (36) comprend un chemin de travail (38), à l'extrémité inférieure (39) duquel il se trouve un bossage qui crée une butée supérieure (42) pour le coulisseau (35) et à l'extrémité supérieure (44) duquel il se trouve un bossage qui, lorsqu'il est dépassé, empêche un retour du coulisseau (35) dans le chemin de travail (38) et refoule le coulisseau (35) dans un chemin d'équilibrage (43), dont l'extrémité inférieure forme une butée inférieure pour le coulisseau (35), dans lequel un bossage empêche un retour du coulisseau (35) de l'extrémité inférieure (39) dans le chemin d'équilibrage (43), dans lequel le bossage de l'extrémité inférieure du chemin de travail (38) est relié à l'extrémité inférieure du chemin d'équilibrage (43) par une rampe, qui permet un mouvement du coulisseau (35) de l'extrémité inférieure du chemin d'équilibrage (43) à l'extrémité inférieure du chemin de travail (38).

5. Dispositif de débrayage selon l'une quelconque des revendications 1 à 4, **caractérisé en ce que** le coulisseau (35) est formé par un fil à ressort (49), qui est façonné de telle manière qu'une force de compression agissant en direction axiale de l'extrémité soit exercée sur une extrémité du fil à ressort (49) se trouvant en liaison active avec la rainure (36).

6. Dispositif de débrayage selon la revendication 5, **caractérisé en ce que** le fil à ressort (49) comprend une traverse (51), qui est espacée de l'extrémité du fil à ressort (49) qui se trouve en liaison active avec la rainure (36) et qui est reliée à celle-ci au moyen d'une première branche (50).

7. Dispositif de débrayage selon la revendication 6, **caractérisé en ce que** la traverse (51) est montée de façon rotative fixée radialement et axialement par rapport à la plaque de base (48).

8. Dispositif de débrayage selon la revendication 7, **caractérisé en ce que** la traverse (51) est reliée de façon solidaire en rotation à la plaque de base (48) par son extrémité située à l'opposé de sa première branche (50).

9. Dispositif de débrayage selon la revendication 8, **caractérisé en ce que** la liaison solidaire en rotation est effectuée au moyen d'une seconde branche (52), qui est immobilisée sur la plaque de base (48) par son extrémité située à l'opposé de la traverse (51).

10. Dispositif de débrayage selon l'une quelconque des revendications 5 à 9, **caractérisé en ce que** la première et/ou la seconde branche (50, 52) est/sont courbée(s) dans la région de la transition avec la traverse (51), de telle manière que les branches (50, 52) et la traverse (51) s'étendent sur des côtés différents du levier de débrayage (7).

11. Dispositif de débrayage selon la revendication 10, **caractérisé en ce que** la première branche (50) et la seconde branche (52) sont guidées à travers des passages (57, 58) dans le levier de débrayage (7).

12. Dispositif de débrayage selon la revendication 11, **caractérisé en ce que** le premier passage (57) destiné à la première branche (50) présente une largeur d'ouverture qui est plus grande qu'un diamètre du fil à ressort (49) et le second passage (58) destiné à la seconde branche (52) est un trou oblong, dont la plus petite largeur d'ouverture correspond au diamètre du fil à ressort.
